# EUROPÄISCHE PATENTSCHRIFT

(11) **EP 4 472 869 B1**
(45) Veröffentlichungstag und Bekanntmachung des Hinweises auf die Patenterteilung: **23.09.2026**
(21) Anmeldenummer: 23703577.9
(22) Anmeldetag: 06.02.2023
(51) Int. Cl.: B60S 1/50

(54) **BERAUMUNG ZUR LEITUNG VON FLUIDEN**
SPATIAL ARRANGEMENT FOR THE DELIVERY OF FLUIDS
DISPOSITION SPATIALE POUR LA DISTRIBUTION DE FLUIDES

(30) Priorität: 24.03.2022 DE 102022106960; 01.02.2023 DE 102023102486
(43) Veröffentlichungstag der Anmeldung: 11.12.2024
(73) Patentinhaber: Motherson DRSC Deutschland GmbH, 96317 Kronach (DE)
(72) Erfinder: SUCK, Wolfgang, 96450 Coburg (DE); GRÜNBECK, Holger, 96264 Altenkunstadt (DE); FISCHER, Markus, 96215 Lichtenfels (DE)
(74) Vertreter: Isarpatent
(86) Internationale Anmeldenummer: PCT/EP2023/052870
(87) Internationale Veröffentlichungsnummer: WO 2023/179952

(56) Entgegenhaltungen:
- DE-A1- 102018 120 014
- DE-A1- 19 833 465
- US-B2- 9 725 074

## Beschreibung

Die vorliegende Erfindung betrifft eine Beraumung zur Leitung von Fluiden in einen dafür vorgesehenen Fluidbehälter. Eine solche Beraumung ist für Fahrzeuge vorgesehen, in deren Karosserie sie integriert ist, sodass von außerhalb des Fahrzeugs Fluide zugeführt werden können.

### Hintergrund

Bei Fahrzeugen ist es bisher üblich, dass Fluide - wie bspw. Wischwasser - über entsprechende Einfüllstutzen im Motorraum zugeführt werden. Hierfür muss sich zunächst Zugang zum Motorraum verschafft werden, in dem eine Motorhaube geöffnet werden muss. Dies ist umständlich und erfordert einen gewissen Sachverstand, da im besten Fall nur Fachpersonal Zugang zum Motorraum eines Fahrzeuges haben sollte, um dort fachgerechte Wartungen oder Reparaturen durchzuführen. Auch ist die Art und Weise, wie Zugang zum Motorraum gewährt wird, von Modell zu Modell unterschiedlich und keinesfalls intuitiv gestaltet. So ist zum Beispiel die Motorhaube stets durch einen verborgenen Sicherheitshebel verriegelt, welcher beim Öffnen betätigt werden muss und von Modell zu Modell unterschiedlich ausgebildet sowie an unterschiedlichen Stellen angeordnet ist.

Des Weiteren birgt eine solche herkömmliche Art der Zuführung von Fluiden einerseits die Gefahr, dass diese beim Einfüllen verschüttet werden und so in den Motorraum gelangen und dort unter Umständen empfindliche Bauteile beschädigen können, und andererseits kann der Motorraum unmittelbar nach dem Fahren sehr heiß sein, was wiederum eine gewisse Verletzungsgefahr beim Einfüllen bedeutet, ganz zu schweigen von sich bewegenden Motorteilen, sofern der Motor sich noch im Betrieb befindet.

Um für das Zuführen von Fluiden nicht extra in den Motorraum gelangen zu müssen, können auch sog. Serviceklappen am Fahrzeug vorgesehen sein, die bei Bedarf einfach ausgeklappt werden können, damit das entsprechende Fluid eingefüllt werden kann. Nach dem Einfüllen kann die Serviceklappe wieder verschlossen werden. Vorbild hierfür ist das Tanken von flüssigem Kraftstoff, was seit vielen Jahren bereits ausschließlich über separate Tankklappen - oftmals hinten rechts und/oder links an einem Fahrzeug - erfolgt.

### Stand der Technik

DE 10 2018 120 014 A1 beschreibt ein Servicemodul für ein Kraftfahrzeug mit einer Tankmulde, die einen Aufnahmeraum umgrenzt und eine Flüssigkeitsdurchtrittsöffnung aufweist, die mit einem Flüssigkeitsvorratsbehälter verbindbar ist. In der Tankmulde ist eine Einfüllwanne mit einer Flüssigkeitsaustrittsöffnung vorgesehen, die um eine Drehachse gegenüber der Tankmulde schwenkbar angeordnet ist, wobei die Flüssigkeitsaustrittsöffnung und die Flüssigkeitsdurchtrittsöffnung unmittelbar benachbart zueinander angeordnet und von der Drehachse durchsetzt sind. Nachteilig bei diesem Servicemodul ist, dass mit der Anordnung der Flüssigkeitsaustrittsöffnung und der Flüssigkeitsdurchtrittsöffnung zueinander kein dichter Abschluss gegenüber dem Kraftfahrzeug gewährt werden kann, da sich die beiden Öffnung gleichzeitig entsprechend der Drehachse zueinander drehen. Hierfür besteht immer ein kleiner Spalt, da sonst keine Drehbewegung zustande kommen könnte. Daher bildet diese Stelle wegen potenzieller Undichtigkeit infolge des Spalts eine Schwachstelle aus. Beim Einfüllen kann so Flüssigkeit an dieser Stelle austreten und in das Kraftfahrzeuginnere gelangen. Des Weiteren weist das beschrieben Servicemodul konstruktionsbedingt Toträume auf, in welchen eingefülltes Fluid zurückbleibt und nicht über die Flüssigkeitsaustrittsöffnung und die Flüssigkeitsdurchtrittsöffnung in den Flüssigkeitsvorratsbehälter gelangt.

DE 20 2016 106 334 U1 beschreibt ein Frontgrillemblem für ein Kraftfahrzeug, welches eine integrale Haubenentriegelung sowie einen Scheibenwaschflüssigkeitssammler umfasst. Das Frontgrillemblem ist hierbei zwischen einer Frontgrillemblemanzeigeposition, einer Haubenentriegelungsposition und einer Scheibenwaschflüssigkeitsfüllposition verstellbar. Der Scheibenflüssigkeitssammler weist in einer Seitenwand eine seitliche Öffnung auf, durch die in der Scheibenwaschflüssigkeitsfüllposition Scheibenwaschflüssigkeit in einen Schlauch gelangt und zu einem Scheibenwaschflüssigkeitsbehälter geführt wird. Nachteilig ist auch hier, dass zum einen durch die beschriebene konstruktive Ausgestaltung Toträume entstehen, in denen sich Scheibenwaschflüssigkeit ungenutzt sammelt und zum anderen die seitliche Öffnung und das Rohr nur in der Scheibenwaschflüssigkeitsfüllposition aufeinander liegen. Abseits dieser Position liegt die seitliche Öffnung frei, sodass überschüssige Scheibenwaschflüssigkeit unkontrolliert aus dem Scheibenwaschflüssigkeitsbehälter in das Innere des Kraftfahrzeugs gelangen kann. Außerdem kann durch die Verlagerung der seitlichen Öffnung in Bezug auf den Schlauch keine dichte Verbindung gewährleistet werden. Es bleibt selbst in der Scheibenwaschflüssigkeitsfüllposition zumindest ein kleiner Spalt bestehen, was Undichtigkeit zur Folge hat. Im ungünstigsten Fall tritt dort beim Einfüllen Scheibenwaschflüssigkeit unkontrolliert aus und gelangt so in den Motorraum, wo es Bauteile beschädigen kann. Auch verschmutzt ein unkontrolliertes Austreten von Scheibenwaschflüssigkeit die Umwelt.

DE 19 833 465 A1 offenbart eine gattungsgemäße Beraumung zur Leitung von Fluiden in einen dafür vorgesehenen Fluidbehälter.

### Aufgabe

Es ist daher Aufgabe der vorliegenden Erfindung, eine Beraumung zur Leitung von Fluiden in einen dafür vorgesehene Fluidbehälter bereitzustellen, welcher die Nachteile des Stands der Technik überwindet und zum einen Toträume vermeidet und zum anderen eine dauerhaft dichte Verbindung zwischen Beraumung und Fluidbehälter bereitstellt.

### Lösung

Die vorstehende Aufgabe wird durch eine Beraumung gemäß den Merkmalen nach Patentanspruch 1 gelöst. Vorteilhafte Ausgestaltungen der Erfindung sind anhand der abhängigen Patentansprüche und anhand der weiteren Beschreibung benannt und dargestellt.

Die vorliegende Erfindung ist eine Beraumung zur Leitung von Fluiden in einen dafür vorgesehenen Fluidbehälter, wobei die Beraumung in einer Karosserie eines Fahrzeugs integriert ist, wenigstens aufweisend ein Gehäuse, das auf wenigstens einer Seite offen ist. Die offene Seite des Gehäuses bildet gleichzeitig dessen Vorderseite aus. Vorn bzw. Vorderseite bezeichnet hierbei die Seite, von der die Beraumung von außen für einen Benutzer während des Einfüllvorgangs zugänglich ist.

Des Weiteren weist die Beraumung wenigstens einen Einsatz auf, der wenigstens zum Teil in das Gehäuse aufgenommen und in diesem linear verschiebbar gelagert ist, wobei der Einsatz in einer Schließposition vollständig im Gehäuse angeordnet ist und in einer Einfüllposition wenigstens zum Teil aus dem Gehäuse herausgezogen ist, und wobei der Einsatz eine obere Öffnung zum Einfüllen eines Fluids und eine untere Öffnung zum Auslassen des Fluids aufweist, wobei die obere Öffnung einen größeren Querschnitt als die untere Öffnung aufweist und an der unteren Öffnung am tiefsten Punkt des Einsatzes eine Schlauchhalterung angeordnet ist.

Außerdem weist die Beraumung wenigstens eine Blende auf, die an dem Einsatz angeordnet ist und in der Schließposition bündig mit der Karosserie abschließt.

Schließlich weist die Beraumung wenigstens einen Fluidschlauch auf, der an die Schlauchhalterung an der unteren Öffnung des Einsatzes anschließt und durch eine Aussparung im unteren Bereich des Gehäuses aus diesem herausgeführt ist, um eingefülltes Fluid vom Einsatz in einen Fluidtank im Inneren des Fahrzeugs zu leiten.

Weitere vorteilhafte Ausgestaltungen ergeben sich aus den Merkmalen gemäß den abhängigen Unteransprüchen.

Vorteilhaft ist bei dem Einsatz die Schlauchhalterung als integraler Bestandteil ausgebildet. Das heißt, die Form der unteren Öffnung des Einsatzes geht nahtlos in die Schlauchhalterung über. Hierdurch wird kein Spalt zwischen Einsatz und Schlauchhalterung ausgebildet, weshalb beim Einfüllen von Fluid nichts austreten kann.

Der Einsatz ist allgemein betrachtet als ein Gefäß ausgebildet, dessen Oberseite offen ist und durch die Fluid in den Einsatz einfüllbar ist. Weiterhin weist der Einsatz auch eine untere Öffnung auf, durch die das eingefüllte Fluid wieder abfließen kann. Die untere Öffnung fungiert hierbei als Ablauf, durch den das eingefüllte Fluid den Einsatz wieder verlässt und über die Schlauchhalterung in den daran angeordneten Fluidschlauch gelangt. Durch die obere und die untere Öffnung ist der Einsatz beidseitig offen ausgebildet.

Der Fluidschlauch ist wiederum vorteilhaft mit einem Fluidtank verbunden. Das heißt, der Fluidschlauch bildet eine Verbindung zwischen dem Fluidtank und der Beraumung bzw. dem Einsatz der Beraumung aus. Beim Einfüllen kann so Fluid in den Fluidtank gelangen, ohne dass dieser direkt über bspw. den Motorraum befüllt werden muss. Ein solcher Fluidtank kann bspw. ein Tank für Wischwasser sein. Ein solcher Fluidtank ist irgendwo unterhalb der Beraumung angeordnet, sodass das Fluid der Schwerkraft folgend stets in diesen hineinläuft.

Vorteilhaft ist der Schlauch sowohl mit dem Fluidtank als auch mit dem Einsatz fluiddicht verbunden. Dies wird dadurch erreicht, dass Schlauch und Einsatz fest miteinander verbunden sind und nicht zueinander bewegbar sind. Eine solche Verbindung wird bspw. erreicht, in dem der Fluidschlauch auf die Schlauchhalterung - die als Schlauchtülle ausgebildet sein kann - aufgesteckt ist. Zusätzlich kann die Verbindung zwischen Fluidschlauch und Schlauchhalterung durch eine Schlauchschelle befestigt sein. Hierdurch wird ein sehr hohes Maß an Sicherheit hinsichtlich Fluiddichtigkeit erreicht.

In der Schließposition ist der Einsatz vollständig in dem Gehäuse aufgenommen. In dieser Position schließt die Blende vorteilhafterweise bündig mit der Karosserie des Fahrzeugs ab. Die Beraumung ist so von außen, d.h. von außerhalb der Karosserie, nicht mehr erreichbar, wobei in dieser Position folglich auch kein Fluid mehr einfüllbar ist. Gleichzeitig fügt sich die Beraumung durch die Blende nahezu "nahtlos" in die Karosserie des Fahrzeugs ein, indem sie bündig mit der die Blende umliegenden Karosserie abschließt.

In der Einfüllposition ist der Einsatz nach vorn in Richtung der offenen Seite des Gehäuses versetzt und ragt aus diesem wenigstens teilweise heraus, sodass gleichzeitig auch die obere Öffnung des Einsatzes aus der Beraumung herausragt. So kann bestimmungsgemäß Fluid über die obere Öffnung in die Beraumung bzw. in den Einsatz der Beraumung eingefüllt werden.

In jeder Position ist der Fluidschlauch derart an die Schlauchhalterung angeschlossen, dass dieser stets nach unten aus dem Gehäuse herausgeführt ist. Hierdurch wird zu jedem Zeitpunkt gewährleistet, dass Fluid aus dem Einsatz heraus und durch den Fluidschlauch nach unten ablaufen kann - unabhängig von der Position des Einsatzes, d.h. in das Gehäuse eingeschoben oder aus diesem herausragend. Dies ist zum Beispiel relevant, wenn sich nach dem Einfüllvorgang noch Fluid innerhalb des Einsatzes befindet, der Einsatz sich aber schon wieder in der Schließposition befindet. Die Verbindung zwischen Fluidtank und Beraumung über den Fluidschlauch bleibt so in jeder Position bestehen, sodass Reste von eingefüllten Fluid unabhängig von der Position weiterhin aus dem Einsatz heraus in den Fluidtank ablaufen können.

In einer alternativen Ausführungsform kann an der Schlauchhalterung weiterhin ein Ablaufventil vorgesehen sein, welches dazu ausgebildet ist, eingefülltes Fluid nur in eine Richtung - und zwar in Ablaufrichtung - durchzulassen. So kann eingefülltes Fluid durch das Ablaufventil und den Fluidschlauch nur in Richtung des Fluidtanks fließen, ein Zurückfließen würde vom Ablaufventil verhindert werden. Alternativ ist ebenfalls denkbar, dass das Ablaufventil derart ausgebildet ist, dass es in der Einfüllposition geöffnet und in der Schließposition geschlossen ist. So kann bspw. während der Fahrt eingefülltes Fluid vom Fluidtank über den Fluidschlauch nicht wieder in den Einsatz hineinschwappen bzw. -fließen, was durch Bewegung des Fluids passieren könnte.

Die Beraumung kann insgesamt eine Längserstreckung in senkrechter Richtung aufweisen. Es kann in diesem Fall von einer hochkanten Ausführungsform gesprochen werden. Es ist ebenfalls denkbar, eine Beraumung zu schaffen, die quer ausgeführt ist. Das heißt, sie weist eine Längserstreckung in waagerechter Richtung auf. Die quere Ausführungsform ist gegenüber der hochkanten Ausführungsform um 90° rotiert. Die obere Öffnung am Einsatz ist in der queren Ausführungsform ebenfalls entsprechend um 90° versetzt zur hochkanten Ausführungsform angeordnet, um ein Einfüllen von Fluid in den Einsatz zu ermöglichen. Die übrigen Komponenten können gleich ausgeführt sein.

In einer vorteilhaften Ausgestaltung der Beraumung gemäß den Merkmalen nach Patentanspruch 2 ist gewählt, dass der Einsatz in dem Gehäuse gleitend gelagert ist. Hierdurch kann der Einsatz ähnlich zu einem Schubfach aus dem Gehäuse herausgezogen bzw. in das Gehäuse hineingeschoben werden, um den Einsatz von der Schließposition in die Einfüllposition und umgekehrt zu verbringen. Der Einsatz ist hierbei formschlüssig über die offene Seite des Gehäuses in diesem aufgenommen.

In einer vorteilhaften Ausgestaltung der Beraumung gemäß den Merkmalen nach Patentanspruch 3 ist gewählt, dass das Gehäuse um 90° versetzt zur offenen Seite wenigstens eine seitliche Aussparung aufweist, in die wenigstens ein Führungszapfen eingreift und gleitend geführt ist, wobei der wenigstens eine Führungszapfen sich seitlich vom Einsatz nach außen hin erstreckt, sodass für den Einsatz sowohl eine Bewegungsführung als auch eine Bewegungsbegrenzung ausgebildet ist, durch welche die Schließposition und die Einfüllposition des Einsatzes definiert sind.

Die Einfüllposition und die Schließposition werden von der wenigstens einen seitlichen Aussparung und dem darin eingreifenden wenigstens einen Führungszapfen vorgegeben. Beim Verschieben des Einsatzes gleitet der wenigstens eine Führungszapfen innerhalb der wenigstens einen Aussparung entlang. Die wenigstens eine seitliche Aussparung gibt hierbei einen Führungspfad für den wenigstens einen Führungszapfen vor. Hierbei bildet die wenigstens eine seitliche Aussparung an einem Ende des Führungspfads in Richtung der offenen Vorderseite des Gehäuses einen Anschlag aus. Beim Erreichen der Einfüllposition stößt der wenigstens eine Führungszapfen an diesen vorderen Anschlag an, sodass eine weitere Bewegung des Einsatzes entlang der wenigstens einen seitlichen Aussparung gestoppt wird. Der Einsatz wird so gleichzeitig in der Einfüllposition in dem Gehäuse der Beraumung gehalten und kann nicht nach vorn aus dem Gehäuse herausfallen. Die Führung über den wenigstens einen Führungszapfen ermöglicht hierbei außerdem eine stabile Lagerung des Einsatzes innerhalb des Gehäuses. In einer alternativen Ausführungsform können zwei Führungszapfen vorgesehen sein, die sich gegenüberliegen und entsprechend in zwei seitliche Aussparungen eingreifen, die sich ebenfalls am Gehäuse gegenüberliegen. Hierdurch wird eine besonders stabile Lagerung des Einsatzes innerhalb des Gehäuses gewährleistet.

Für eine noch stabilere Lagerung und Führung des Einsatzes innerhalb des Gehäuses ist es ebenfalls denkbar sowohl im oberen Bereich als auch im unteren Bereich des Gehäuses entweder auf nur einer Seite oder aber auch auf beiden Seiten gegenüberliegend jeweils eine seitliche Aussparung oben und unten vorzusehen, in die jeweils ein Führungszapfen oder aber auch zwei nebeneinander liegende Führungszapfen für eine gesteigerte Stabilität eingreifen. Die seitlichen Aussparungen sind hierbei stets parallel zueinander angeordnet.

Es ist ebenfalls denkbar, dass bei der wenigstens einen seitlichen Aussparung ein weiterer Anschlag zur Begrenzung der Bewegung des Einsatzes in der Schließposition vorgesehen ist. So kann der Einsatz beim Erreichen der Schließposition nicht weiter in das Gehäuse hineingedrückt werden, sodass die Blende exakt mit der Karosserie abschließt. Einer etwaigen Beschädigung der Beraumung durch unsachgemäßes tiefes Hineindrücken des Einsatzes in das Gehäuse nach einem Einfüllvorgang kann so effektiv vorgebeugt werden. Der weitere Anschlag liegt dem ersten vorderen Anschlag diametral gegenüber.

In einer vorteilhaften Ausgestaltung der Beraumung gemäß den Merkmalen nach Patentanspruch 4 ist gewählt, dass an dem Gehäuse wenigstens ein Teleskopauszug angeordnet ist, der mit dem Einsatz verbunden ist, sodass der Einsatz mithilfe des Teleskopauszugs aus dem Gehäuse herausziehbar ist. Hierdurch kann zum einen eine besonders sanfte Gleitbewegung des Einsatzes bewirkt werden, zum anderen lässt sich mit einem Teleskopauszug der Einsatz komplett aus dem Gehäuse herausziehen. So kann die obere Öffnung zum Einfüllen des Fluids leicht und komfortabel erreicht werden. Des Weiteren ist denkbar, dass der wenigstens eine Teleskopauszug eine Soft-close-Mechanik aufweist. Dadurch lässt sich der Einsatz nach dem Einfüllvorgang leicht und schonend wieder in die Schließposition verbringen, indem der Einsatz ein Stück weit in das Gehäuse hineingeschoben wird und für den restlichen Weg der Einsatz selbsttätig in die Schließposition fährt. Dadurch wird vorteilhaft vermieden, dass der Einsatz unsanft in die Schließposition verbracht werden kann, was wiederum eine hohe Abnutzung bis hin zu Beschädigungen der Beraumung zur Folge haben kann.

In einer vorteilhaften Ausgestaltung der Beraumung gemäß den Merkmalen nach Patentanspruch 5 ist gewählt, dass der Einsatz einteilig ausgebildet ist. Das Material des Einsatzes ist hierbei Kunststoff, Metall, Verbundmaterial oder eine Kombination hieraus. Als Verbundmaterial können bspw. glasfaser- oder carbonfaserverstärkte Kunststoffe zum Einsatz kommen.

Der Einsatz ist vorteilhaft als ein einteiliges Spritzgussteil ausgebildet, was die wenigstens eine Rastaufnahme und den Schlauchansatz an der unteren Öffnung mit umfasst. Im Falle von Kunststoff als Material ist der Einsatz als ein Kunststoffspritzgussteil ausgebildet. So ist der Einsatz schnell, kostengünstig, in hoher Stückzahl und stabil herstellbar.

Ebenso ist denkbar, dass auch die übrigen Komponenten der Beraumung - wie das Gehäuse und die Blende nebst der wenigstens einen Rastnase - ebenfalls als Spritzgussteil, bevorzugt als Kunststoffspritzgussteil, ausgebildet sind.

In einer vorteilhaften Ausgestaltung der Beraumung gemäß den Merkmalen nach Patentanspruch 6 ist gewählt, dass die untere Öffnung des Einsatzes trichterförmig ausgebildet ist. Die ausgebildete Trichterform kann hierbei entweder pyramidal oder konisch sein.

Im Fall der pyramidal geformten Ablauföffnung bzw. der pyramidalen Trichterform sind die Flächen im unteren Bereich des Einsatzes, die unmittelbar an die untere Öffnung angrenzen, zu dieser nach unten hin geneigt und gleichzeitig zu dieser hin verjüngt ausgebildet, sodass Fluide stets zur unteren Öffnung hin geleitet werden und dort abfließen können. Die Flächen müssen hierbei nicht unbedingt flach ausgebildet sein. Sie können ebenso in einer alternativen Ausgestaltung gewölbt ausgebildet sein. In jedem Fall sind sie derart ausgebildet, dass sie das Fluid zur unteren Öffnung hin leiten.

Im Falle der konisch geformten Ablauföffnung bzw. der konischen Trichterform weist die Fläche im unteren Bereich des Einsatzes, die unmittelbar an die untere Öffnung angrenzt, eine sich nach unten hin verjüngende Kegelform auf. So leitet sie eingefülltes Fluid stets in Richtung der unteren Öffnung. Die Kegelform muss hierbei nicht unbedingt einer streng mathematisch definierten Kegelform entsprechen. Sie kann ebenso in einer alternativen Ausgestaltung zusätzlich konkav oder konvex gewölbt ausgebildet sein.

Es sind durch die im unteren Bereich des Einsatzes pyramidal oder konisch geformten Flächen zur unteren Öffnung hin vorteilhaft keine waagerechten Flächen oder Ecken vorhanden, die sogenannte Toträume ausbilden könnten, in denen eingefülltes Fluid nach dem Einfüllen als Rest verbleibt und nachteiligerweise nicht ablaufen kann und so im Einsatz zurückbleiben würde. Der vollständige Ablauf des eingefüllten Fluids aus dem Einsatz wieder heraus in den Fluidschlauch und anschließend in den Fluidtank ist hierdurch stets in jeder Position des Einsatzes gewährleistet. Fluidreste können durch diese konstruktive Ausgestaltung des unteren Bereichs des Einsatzes vorteilhafterweise nicht im Einsatz zurückbleiben.

Des Weiteren wird durch diese konstruktive Ausgestaltung ein Ablaufen von Fluid in jedem Fall sicher gewährleistet. Es findet hierdurch auch ein schneller und direkter Fluiddurchlauf beim Einfüllen statt, sodass die Beraumung vorteilhaft entsprechend kompakt ausgebildet werden kann. Das eingefüllte Fluid gelangt ohne große Umwege direkt in den Fluidschlauch und kann rasch ablaufen. Ein weiterer Vorteil ist, dass durch das schnelle Abfließen von eingefüllten Fluid, was durch diese konstruktive Ausgestaltung des Einsatzes gewährleistet ist, zum einen eine schnelles Einfüllen von Fluid möglich ist, was unnötige Wartezeiten erspart, und zum anderen ein Überlaufen durch Fluidstau im Einsatz verhindert wird, weil zum Beispiel viel Fluid in sehr kurzer Zeit eingefüllt wird, was aber wiederum vom Einsatz schnell aufgenommen und rasch in den Fluidtank weitergeleitet wird.

In einer vorteilhaften Ausgestaltung der Beraumung gemäß den Merkmalen nach Patentanspruch 7 ist gewählt, dass die Schlauchhalterung als eine Schlauchtülle ausgebildet ist, auf die der Fluidschlauch aufsteckbar ist. Hierdurch ist eine besonders einfache, aber auch sichere Anbringung des Fluidschlauchs an den Einsatz möglich. Der Fluidschlauch und die Schlauchtülle bilden durch das Aufstecken eine dichte Verbindung aus. Dadurch wird ein Austreten von eingefüllten Fluid effektiv verhindert. Zur sichereren Halterung des Schlauchs ist ebenfalls denkbar, dass die Schlauchtülle am Außenumfang umlaufende Vorsprünge aufweist, die die Wirkung von Widerhaken entfalten und so ein Abreißen des Fluidschlauchs verhindern. Zusätzlich oder alternativ ist denkbar, dass der Fluidschlauch mit einer Schlauchschelle am Schlauchstutzen gesichert ist. Hierdurch kann ein unbeabsichtigtes Austreten von Fluid in jedem Fall verhindert werden.

Die Möglichkeit, den Fluidschlauch einfach auf die Schlauchtülle aufstecken zu können, macht darüber hinaus eine Montage der Beraumung einfach und unkompliziert.

In einer vorteilhaften Ausgestaltung der Beraumung gemäß den Merkmalen nach Patentanspruch 8 ist gewählt, dass die wenigstens eine seitliche Aussparung am Gehäuse geradlinig ausgebildet ist. Hierdurch wird eine geradlinige Führung des Einsatzes über den wenigstens einen Führungszapfen, welcher in die wenigstens eine seitliche Aussparung eingreift, gewährleistet. Die geradlinige Führung kann hierbei waagerecht nach vorn, aber auch leicht geneigt nach schräg oben oder schräg unten erfolgen, je nach dem welchen Winkel die wenigstens eine Aussparung gegenüber einer waagerechten Ausrichtung aufweist.

In einer vorteilhaften Ausgestaltung der Beraumung gemäß den Merkmalen nach Patentanspruch 9 ist gewählt, dass das Gehäuse wenigstens eine Halterung aufweist, an die wenigstens ein Anbauteil anbringbar ist. Hierdurch lassen sich ein oder mehrere funktionale Anbauteile in die Beraumung integrieren, die bspw. das Einfüllen von Fluid erleichtern sollen. Die wenigstens eine Halterung kann hierbei als Rastvorsprung, Rastaufnahme oder Vorsprung zur Befestigung mit Schrauben, Klemmen, Nieten und/oder Klebstoff ausgebildet sein.

Als Anbauteile kommen Aktoren wie bspw. Zentralverriegelungsversteller (ZV-Versteller), Elektro-Stellmotoren, Schrittmotoren oder Verschließzylinder in Betracht. Denkbar sind ebenfalls Anbauteile in Form von Sensoren, wie zum Beispiel Füllstandssensoren, oder Signalgeber, die optische und/oder akustische Signale abgegeben können. So kann beim Einfüllen bspw. durch Blinken oder Piepen signalisiert werden, wann der maximale Füllstand erreicht ist und mit dem Einfüllen aufgehört werden soll. Es ist ebenfalls auch denkbar, dass als Anbauteil bzw. als Anbauteile Leuchtelemente, wie bspw. eine oder mehrere LEDs, vorgesehen sind. Mit diesen ist eine Ausleuchtung des Einfüllbereichs, das heißt der Bereich der oberen Öffnung des Einsatzes, möglich, womit ein Einfüllen auch bei schlechten Lichtbedingungen gut und sicher durchführbar ist.

In einer vorteilhaften Ausgestaltung der Beraumung gemäß den Merkmalen nach Patentanspruch 10 ist gewählt, dass das wenigstens eine Anbauteil ein Verschlusszylinder ist, welcher gegenüberliegend zur offenen Seite des Gehäuses angeordnet ist. Vereinfacht gesagt ist der Verschließzylinder an der Rückwand des Gehäuses angeordnet, wobei die Rückwand die Wand des Gehäuses ist, welche der vorderen offenen Seite gegenüberliegt. Der Verschließzylinder dient zum Öffnen und Schließen der Beraumung. Dieser kann hierbei einen Push-Push-Mechanismus bzw. einen Pusch-top-open-Mechanismus aufweisen. Durch Druck auf die Blende wird der Einsatz leicht nach hinten in die Karosserie hineingedrückt, wobei der Einsatz gegen den Verschließzylinder drückt, woraufhin dieser den Einsatz freigibt und wiederum nach vorn heraus in die Einfüllposition drückt. Nach erfolgter Fluidzufuhr kann der Einsatz durch Druck auf die Blende wieder leicht in die Karosserie hinein gedrückt werden, wobei der Einsatz abermals gegen den Verschließzylinder drückt, woraufhin dieser diesmal den Einsatz verriegelt und gleichzeitig in der Schließposition hält. Der Vorgang ist beliebig oft wiederholbar.

In einer vorteilhaften Ausgestaltung der Beraumung gemäß den Merkmalen nach Patentanspruch 11 ist gewählt, dass das Gehäuse wenigstens ein Halteelement zur Halterung der Beraumung an der Karosserie aufweist. Solch ein Halteelement ist vorteilhaft als Vorsprung in Form einer Haltenase ausgebildet, die an die Innenseite der Karosserie drückt. Gleichzeitig umgreift ein Teil des Gehäuses den inneren Rand der Aussparung in der Karosserie, in welcher die Beraumung angeordnet ist und durch welche der Einsatz der Beraumung von außerhalb der Karosserie zugänglich ist. Zur besseren Halterung der Beraumung an der Karosserie können auch mehrere Halterungen vorgesehen sein.

In einer vorteilhaften Ausgestaltung der Beraumung gemäß den Merkmalen nach Patentanspruch 12 ist gewählt, dass an dem Gehäuse wenigstens ein akustischer und/oder optischer Signalgeber angeordnet ist. Ein solcher Signalgeber ist in der Lage der Person, die ein Fluid in den Einsatz einfüllt, optisch und/oder akustisch Rückmeldung über den Füllstand des Fluids im Fluidtank zu geben. So kann im Falle eines optischen Signalgebers ein Lichtelement durch Blinken und/oder durch eine bestimmte Farbe anzeigen, ob bspw. der maximale Füllstand erreicht worden ist und das Einfüllen von Fluid beendet werden soll. So ist bspw. denkbar, dass Rot für einen niedrigen Füllstand, gelb für halb voll und grün für voll steht. Ebenso ist es denkbar, durch Blinken des optischen Signalgebers den Füllstand wiederzugeben. So kann bspw. ein langsames Blinken einen niedrigen Füllstand und ein schnelles Blinken einen hohen Füllstand im Fluidtank anzeigen. Das Tempo des Blinkens kann hierbei für den Füllstand stehen. Auch können bspw. mehrere nebeneinander angeordnete Lichtelemente eine optische Füllstandsanzeige ausbilden, wobei je nach Füllstand unterschiedlich viele Lichtelemente Licht emittieren.

Im Falle eines akustischen Signalgebers ist es denkbar, dass ein Piepen Rückmeldung über den Füllstand im Fluidtank gibt. So kann ein Piepton anzeigen, dass beim Einfüllen der maximale Füllstand erreicht worden ist und das Einfüllen beendet werden sollte. Auch könnte ein Piepen mit unterschiedlichem Tempo abhängig vom aktuellen Füllstand im Fluidtank erfolgen. So könnte der akustische Signalegeber bspw. je schneller piepen, desto höher der Füllstand im Fluidtank ist. Ebenso könnte auch die Tonhöhe des akustischen Signalgebers abhängig vom Füllstand variiert werden. Je höher der Ton, desto höher ist bspw. der Füllstand im Fluidtank.

In jedem Fall sind hierfür im Fluidtank ein oder mehrere Füllstandssensoren angeordnet, die den Füllstand an die akustischen und/oder optischen Signalgeber weitergeben.

In einer vorteilhaften Ausgestaltung der Beraumung gemäß den Merkmalen nach Patentanspruch 13 ist gewählt, dass an dem Gehäuse wenigstens ein Lichtelement zur Beleuchtung des Einsatzes angeordnet ist. Hierdurch ist vorteilhaft ein Einfüllen von Fluid auch bei schlechten Lichtbedingungen einfach und sicher möglich. Gleichzeitig wird eine Person, die Fluid einfüllen möchte, durch das Licht des Lichtelements zur Beraumung geführt, da die Beleuchtung von außerhalb der Karosserie sichtbar ist. So wird eine einfache und intuitive Bedienung der Beraumung bereitgestellt.

In einer vorteilhaften Ausgestaltung der Beraumung gemäß den Merkmalen nach Patentanspruch 14 ist gewählt, dass an der Blende wenigstens eine Rastnase vorgesehen ist, die in wenigstens eine entsprechende Rastaufnahme am Einsatz eingreift. Rastnase und Rastaufnahme bilden hierbei eine Rastverbindung aus, mithilfe derer die Blende an dem Einsatz gehalten wird. Blende und Einsatz sind dadurch fest miteinander verbunden.

Die wenigstens eine Rastnase und die wenigstens eine Rastaufnahme zwischen Einsatz und Blende sind vorteilhaft als Klickverbindung ausgebildet, sodass bspw. Blenden unterschiedlicher Form und/oder Farbe schnell und einfach an dem Einsatz angebracht werden können. Dadurch ist es möglich, die hier beschriebene Beraumung für verschiedenste Modelle von Fahrzeugen schnell und einfach bereitzustellen, indem die jeweils gewünschte Blende schnell und einfach mit dem Einsatz verbindbar ist, sodass ein optimaler Abschluss zur Karosserie bereitgestellt werden kann.

Weitere Vorteile, Merkmale und Ausgestaltungsmöglichkeiten ergeben sich aus der nachfolgenden Figurenbeschreibung von nicht einschränkend zu verstehenden Ausführungsbeispielen.

### Kurzbeschreibung der Zeichnungen

In den Zeichnungen zeigt:
- Fig. 1: Perspektivische Ansicht einer Beraumung in einer Schließposition von schräg oben
- Fig. 2: Perspektivische Ansicht einer Beraumung in einer Einfüllposition von schräg oben
- Fig. 3: Perspektivische Explosionsansicht einer Beraumung von schräg oben vorn
- Fig. 4: Perspektivische Explosionsansicht einer Beraumung von schräg oben hinten
- Fig. 5: Perspektivische Ansicht einer Beraumung in einer Einfüllposition von schräg oben
- Fig. 6: Eine erste Ausführungsform eines Anbauteils
- Fig. 7: Eine zweite Ausführungsform eines Anbauteils
- Fig. 8: Eine dritte Ausführungsform eines Anbauteils

In den Zeichnungen mit gleichen Bezugszeichen versehene Elemente entsprechen im Wesentlichen einander, sofern nichts anderes angegeben ist. Darüber hinaus wird darauf verzichtet, Bestandteile zu zeigen und zu beschreiben, welche nicht wesentlich zum Verständnis der hierin offenbarten technischen Lehre sind. Im Weiteren werden nicht für alle bereits eingeführten und dargestellten Elemente die Bezugszeichen wiederholt, sofern die Elemente selbst und deren Funktion bereits beschrieben wurden oder für einen Fachmann bekannt sind.

### Ausführliche Beschreibung von Ausführungsbeispielen

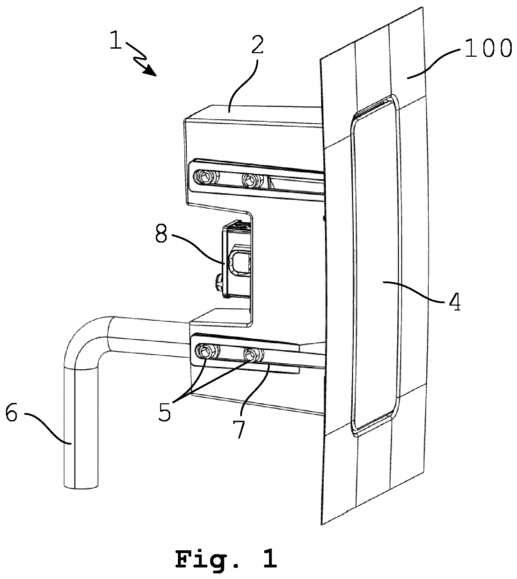

Fig. 1 zeigt eine perspektivische Ansicht einer Beraumung 1 in einer Schließposition von schräg oben, wobei die Vorderseite der Beraumung 1 vom Betrachter aus rechts ist. Diese wird von einer Karosserie 100 - hier als ein Ausschnitt gezeigt - eines Fahrzeugs und darin mittig und bündig angeordnet von einer Blende 4 ausgebildet. In der gezeigten Ausführungsform weist die Blende 4 eine rechteckige Form mit abgerundeten Ecken in hochkanter Ausrichtung auf. Die Blende 4 ist an einem Einsatz 3 befestigt, welcher wiederum in einem Gehäuse 2 geradlinig verschiebebeweglich aufgenommen ist. (Der Einsatz 3 ist hierbei vollständig in dem Gehäuse 2 aufgenommen und dadurch nicht sichtbar.) Die Verschiebebewegung ist hierbei durch eine verschiebebewegliche Gleitlagerung des Einsatzes 3 im Gehäuse 2 bewirkbar. Hierfür sind seitlich am Gehäuse 2, d.h. um 90° versetzt zur Vorderseite der Beraumung 1, im oberen und unteren Bereich jeweils eine seitliche Aussparung 7 angeordneten. Die seitlichen Aussparungen 7 oben und unten liegen auf jeder Seite auf gleicher Höhe und sind parallel zueinander angeordnet. (Die seitlichen Aussparungen 7 auf der vom Betrachter abgewandten Seite sind nicht zu sehen.)

Die seitlichen Aussparungen 7 weisen die Form von länglichen Führungsschlitzen auf. Sie haben jeweils eine langgezogene Langlochform. In die seitlichen Aussparungen 7 greifen oben und unten jeweils zwei Führungszapfen 5 ein, die mit dem Einsatz 3 verbunden sind. Die Führungszapfen 5 werden durch die seitlichen Aussparungen 7 gleitend geführt. Hierdurch kann der Einsatz 3 in seiner Schiebebewegung sicher geführt werden und von einer Schließposition, wie hier in Fig. 1 gezeigt, in eine Einfüllposition verbracht werden, indem der Einsatz 3 nach vorn aus dem Gehäuse 2 herausgeschoben wird.

Unterhalb des Einsatzes 3 ist ein Fluidschlauch 6 angeordnet, der nach hinten und nach unten aus dem Gehäuse 2 herausgeführt ist und die Verbindung zu einem Fluidtank herstellt, welcher hier nicht gezeigt ist.

Auf der Rückseite des Gehäuses 2, der Blende 4 gegenüberliegend, ist im mittleren Bereich ein Anbauteil 8 angeordnet. Das Anbauteil 8 kann verschiedene Funktionen aufweisen. So ist denkbar, dass hierdurch eine Ver- oder Entriegelung des Einsatzes 3 bewirkbar ist, sodass die Beraumung 1 über eine externe Steuerung auf Befehl eines Benutzers hin je nach Wunsch ver- oder entriegelt werden kann. Der Einsatz 3 kann bspw. so in der Schließposition verriegelt werden, sodass dieser von außerhalb der Karosserie 100 nicht geöffnet werden kann. Eine Entriegelung dahingehen kann den Einsatz 3 freigeben, sodass dieser von außen aus dem Gehäuse 2 herausgezogen werden kann.

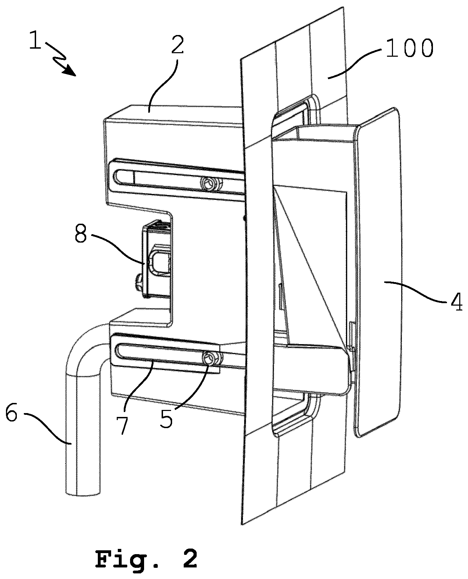

Fig. 2 zeigt eine perspektivische Ansicht einer Beraumung 1 in einer Einfüllposition von schräg oben. Fig. 2 zeigt die Beraumung 1, wie sie bereits in Fig. 1 gezeigt ist, jedoch in einer anderen Position, und zwar in einer Einfüllposition. Der Einsatz 3 weist ist auf seiner Oberseite offen ausgebildet. Durch diese obere Öffnung kann ein Fluid in den Einsatz 3 eingefüllt werden. In der Einfüllposition ist der Einsatz 3 derart aus den Gehäuse 2 herausgezogen, dass dieser nur noch zum Teil in dem Gehäuse 2 aufgenommen ist. Der Großteil des Einsatzes 3 befindet sich in dieser Position außerhalb der Karosserie 100 und ist somit von außerhalb zugänglich.

Die seitlichen Aussparungen 7 bilden an ihren Enden jeweils einen Anschlag aus, an welchen die Führungszapfen 5 entsprechend anschlagen können und so die Bewegung des Einsatzes 3 begrenzen. Auf diese Weise werden sowohl die Schließposition als auch die Einfüllposition vorgegeben. In Fig. 2 schlägt jeweils ein Führungszapfen 5 oben und unten an das jeweilige Ende, welches in Richtung der Vorderseite des Gehäuses 2 angeordnet ist, an und verhindert damit, dass der Einsatz 3 weiter aus dem Gehäuse 2 herausgezogen werden kann. Dadurch wird gleichzeitig auch ein Herausfallen des Einsatzes 3 aus dem Gehäuse 2 heraus verhindert.

Der Einsatz 3 kann geführt von den Führungszapfen 5 in den seitlichen Aussparungen 7 entlang deren Längserstreckung vor- und zurückgleiten, um so von der Schließposition in die Einfüllposition und umgekehrt verbracht zu werden.

Im mittleren Bereich ist hinten am Gehäuse 2 ein Anbauteil 8 angeordnet. Ein solches Anbauteil 8 kann - wie schon bei Fig. 1 beschrieben - eine Ver- oder Entriegelung des Einsatzes 3 bewirken. Hierfür kann das Anbauteil 8 als Push-Push-Mechanismus, Push-to-open-Mechanismus, 2-poliger oder 4-poliger ZV-Steller mit einem E-Stellmotor ausgebildet sein.

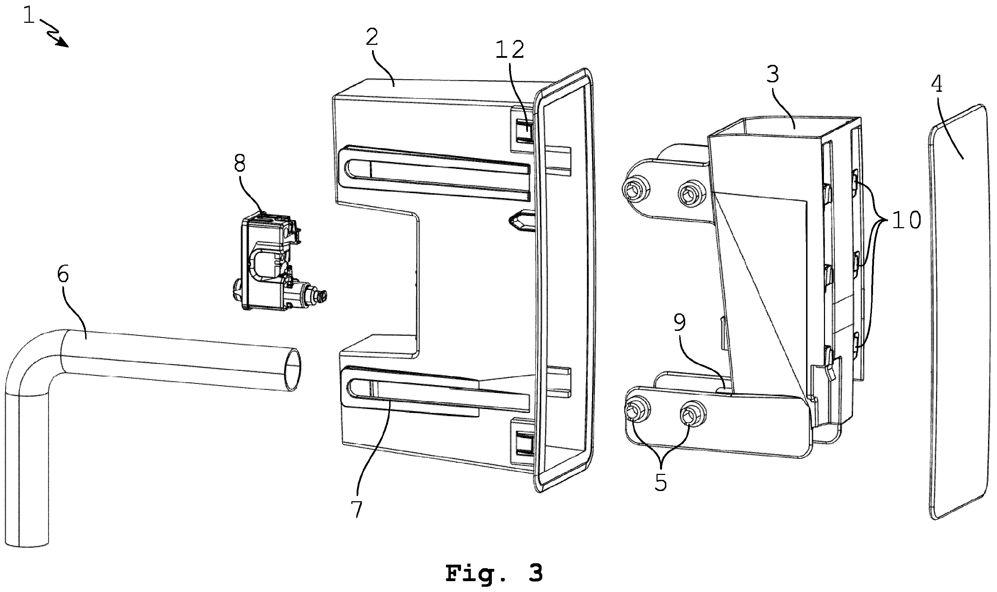

Fig. 3 zeigt eine perspektivische Explosionsansicht einer Beraumung 1 von schräg oben vorn. Es ist hierbei die Beraumung 1 gezeigt, welche bereits in Fig. 1 und Fig. 2 offenbart ist. Durch die Explosionsansicht sind die einzelnen Komponenten einzeln sichtbar und werden nicht gegenseitig verdeckt. So sind bei dem Einsatz 3 oben und unten jeweils zwei sich waagerecht nach hinten erstreckende Flügel angeordnet, von denen sich wiederum seitlich jeweils zwei Führungszapfen 5 nach außen hin erstrecken. Das Vorsehen von jeweils zwei Führungszapfen 5 pro Flügel erlaubt eine stabile Lagerung des Einsatzes 3 in den seitlichen Aussparungen 7 des Gehäuses 2. Außerdem wird durch die paarweise Anordnung ein Verkippen und/oder Verkanten des Einsatzes 3 innerhalb des Gehäuses 2 verhindert. So ist stets eine sichere Gleitlagerung gewährleistet.

Zwischen den beiden unteren Flügeln des Einsatzes 3 erstreckt sich mittig eine nach hinten ausgerichtete Schlauchhalterung 9, die hier als Schlauchtülle ausgebildet ist und auf die der Fluidschlauch 6 aufsteckbar ist, wobei in einem montierten Zustand der Beraumung 1 der Fluidschlauch 6 zunächst durch eine untere Aussparung im Gehäuse 2 geführt werden muss, um mit der Schlauchhalterung 9 verbunden werden zu können.

Auf der Vorderseite des Einsatzes 3, d.h. in Richtung der Blende 4 sind insgesamt sechs Rastaufnahmen 10 angeordnet, die paarweise übereinander angeordnet sind. An diese Rastaufnahmen 10 kann die Blende 4 über entsprechende Rastnasen 11 - hier nicht gezeigt - mit dem Einsatz 3 verbunden werden.

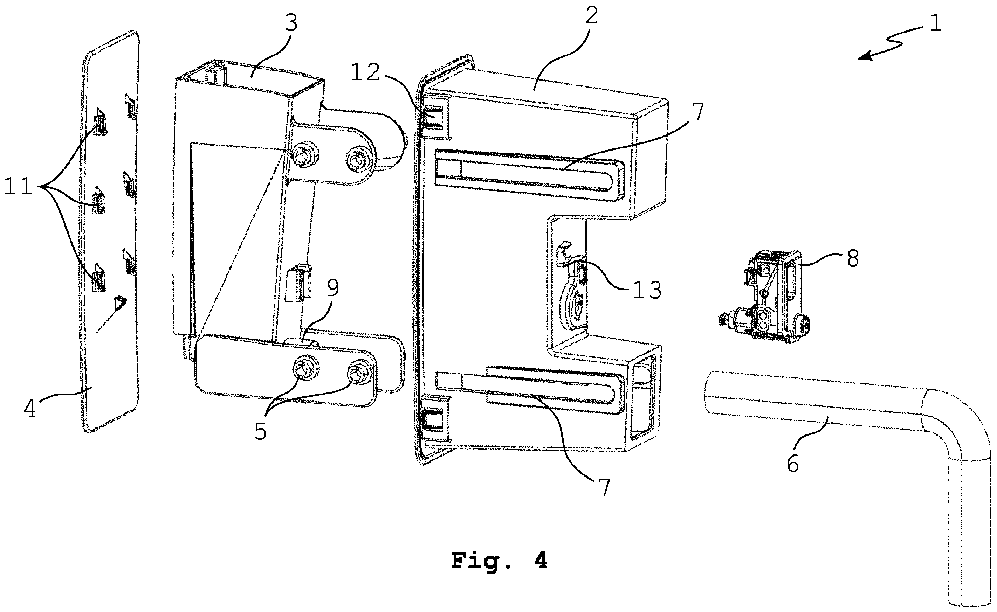

Fig. 4 zeigt eine perspektivische Explosionsansicht einer Beraumung 1 von schräg oben hinten. Sie entspricht der in Fig. 3 gezeigten Beraumung 1, jedoch in einen um 180° versetzten Betrachtungswinkel. So sind in dieser Ansicht jeweils die Rückseiten der einzelnen Komponenten der Beraumung 1 sichtbar.

Die Blende 4 weist sechs paarweise angeordnete Rastnasen 11 auf, die gemeinsam mit den Rastaufnahmen 10 - hier nicht sichtbar - am Einsatz 3 eine Rastverbindung bzw. eine Klickverbindung ausbilden. So kann die Blende 4 an dem Einsatz 3 durch Einrasten bzw. Einklicken einfach und sicher befestigt werden.

Der Einsatz 3 weist im mittleren Bereich ein Verschlusselement auf. Dieses ist als eine Erhebung ausgebildet, die sich nach hinten erstreckt und in der Mitte eine senkrechte Aussparung aufweist. Die Seiten neben der Aussparung bilden jeweils eine Hinterschneidung aus. So kann bspw. ein Verriegelungsstift in senkrechter Stellung durch die Aussparung geführt werden und anschließen gedreht werden, sodass der Verriegelungsstift in die Hinterschneidung rechts und links von der Aussparung eingreift und so eine Verriegelung bewirkt.

Auf der Rückseite des Gehäuses 2 ist mittig eine Halterung 13 für ein Anbauteil 8 angeordnet. An diese Halterung 13 kann das Anbauteil 8 befestigt werden. Dabei ist unterhalb der Halterung 13 weiterhin eine Aussparung in dem Gehäuse 2 vorgesehen, durch die das Anbauteil 8 wenigstens zu Teil hindurchragen kann und so mit Komponenten innerhalb des Gehäuses in Wirkverbindung treten kann. In vorliegendem Fall kann so das Anbauteil 8 in Wirkverbindung mit dem Einsatz 3 bzw. mit dem Verschlusselement daran stehen.

Schließlich ist auch eine Aussparung im unteren Bereich des Gehäuses 2 offenbart, durch die der Fluidschlauch 6 durchsteckbar ist, um für den bestimmungsgemäßen Gebrauch der Beraumung 1 auf die Schlauchhalterung 9 des Einsatzes 3 gesteckt werden zu können.

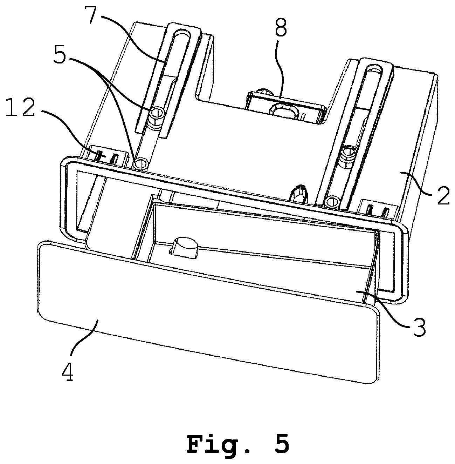

Fig. 5 zeigt eine perspektivische Ansicht einer Beraumung 1 in einer Einfüllposition von schräg oben, wobei in dieser alternativen Ausführungsform die Beraumung 1 gegenüber der Ausführungsform aus den Fig. 1 bis Fig. 4 um 90° rotiert ist, d.h. mit einer Erstreckung in waagerechter Richtung statt in senkrechter Richtung. Vereinfacht gesagt ist eine Ausführungsform der Beraumung 1 gezeigt, die nicht senkrecht, sondern quer ausgerichtet ist. Der Einsatz 3 weist hierbei weiterhin an seiner oberen Seite eine Öffnung auf, durch die ein Fluid eingefüllt werden kann. Einziger Unterschied zu der vorangegangenen Ausführungsform ist hierbei, dass die obere Seite des Einsatzes 3 die Seite mit der Längserstreckung des Einsatzes 3 ist. Die Funktionsweise der Beraumung 1 ist hierbei gegenüber der vorangegangenen Ausführungsform dieselbe, nur mit dem Unterschied, dass die Beraumung 1 eine Erstreckung in waagerechter statt in senkrechter Richtung aufweist.

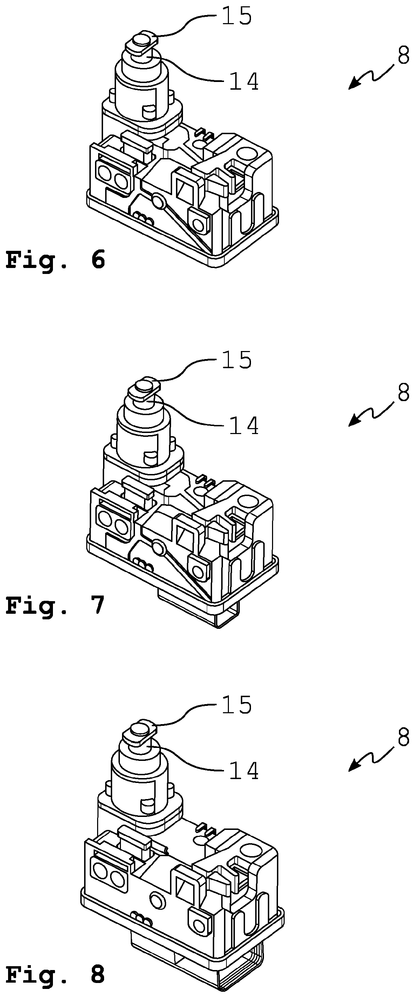

Fig. 6 bis Fig. 8 zeigen verschiedene Ausführungsformen eines Anbauteils 8, welches über eine Halterung 13 an einem Gehäuse 2 - beides hier nicht gezeigt - anbringbar ist. Fig. 6 zeigt eine erste Ausführungsform des Anbauteils 8, welches eine rein mechanische Push-Push-Verschlussfunktion bzw. Pusch-Push-Mechanismus aufweist. Eine solche Funktion ist auch als Push-to-open-Mechanismus bekannt. Durch Druck auf einen Schließzylinder 14, welcher in Fig. 6 links oben am Anbauteil 8 angeordnet ist und sich senkrecht nach oben hin erstreckt, wird dieser freigegeben, wobei der Schließzylinder 14 zum einen teleskopartig ausfährt und zum anderen eine Viertelumdrehung vollzieht. Am äußeren Ende des Schließzylinder 14 ist ein querliegender Verriegelungsstift 15 angeordnet, welcher entsprechend der Drehung des Schließzylinders 14 mitbewegt wird. Der Verriegelungsstift 15 ist dazu ausgebildet, in eine entsprechende Aussparung bzw. ein Verschlusselement an einem Einsatz 3 - hier nicht gezeigt - einzugreifen.

Das in Fig. 6 gezeigte Anbauteil 8 befindet sich in der Position, bei der sich ein damit in Verbindung stehender Einsatz 3 in der Schließposition befindet. Der Schließzylinder 14 ist hierbei in einem eingefahrenen Zustand und der Verriegelungsstift 15 liegt quer, womit er den Einsatz 3 formschlüssig in der Schließposition hält und verriegelt. Wird nunmehr Druck von außen auf den Einsatz 3 ausgeübt, wird dieser auf den Schließzylinder 14 übertragen, der dadurch ein wenig gestaucht wird. Diese Stauchung aktiviert den Pusch-Push-Mechanismus, das heißt, mit Weglassen der Druckbeaufschlagung fährt der Schließzylinder 14 teleskopartig aus und schiebt dabei den Einsatz 3 an, welcher sodann von der Schließposition in die Einfüllposition schwenkt. Gleichzeitig vollzieht der Verriegelungsstift 15 eine Viertelumdrehung, wodurch dieser aus der Aussparung am Einsatz 3 gleitet und damit die formschlüssige Verbindung zwischen Anbauteil 8 und Einsatz 3 aufgehoben wird, sodass der Einsatz 3 vollständig in die Einfüllposition schwenken kann und nicht mehr vom Anbauteil 8 zurückgehalten wird.

Beim Überführen des Einsatzes 3 von der Einfüllposition in die Schließposition wird der oben geschilderte Ablauf in umgekehrter Reihenfolge absolviert. Am Ende befindet sich der Einsatz 3 wieder in der Schließposition und wird durch das Anbauteil 8 mit dem Verriegelungsstift 15 in dieser Position gehalten. Der Einsatz 3 kann so nicht mehr selbsttätig wieder in die Einfüllposition schwenken.

Fig. 7 zeigt eine zweite Ausführungsform des Anbauteils 8, so wie es bereits in Fig. 6 gezeigt ist. Im Unterschied dazu weist die hier gezeigte Ausführungsform zusätzlich im Inneren einen E-Stellmotor auf, welcher über einen 2-poligen Anschluss und über eine Steuerung angesteuert werden kann. Der 2-polige Anschluss ist hierbei in der Fig. 7 vom Betrachter aus gesehen unterhalb des Anbauteils 8 angeordnet und als Steckerbuchse ausgebildet. Der E-Stellmotor im Inneren des Anbauteils 8 hat die Funktion den Schließzylinder 14 elektromotorisch zu bewegen, sodass zum Verbringen des Einsatzes 3 von der Schließposition in die Einfüllposition keine anfängliche Druckbeaufschlagung von außen erforderlich ist. Ein solches Anbauteil 8 kann auch als 2-poliger ZV-Steller bzw. als 2-poliger Zentralverriegelungssteller bezeichnet werden.

Fig. 8 zeigt eine dritte Ausführungsform des Anbauteils 8, so wie es bereits in Fig. 7 gezeigt ist, mit dem Unterschied, dass statt eines 2-poligen Anschlusses ein 4-poliger Anschluss vorgesehen ist. Dementsprechend ist die Steckerbuchse für den 4-poligen Anschluss größer ausgebildet als die vom 2-poligen Anschluss. Das gezeigten Anbauteil 8 weist die gleichen Funktionen auf, wie das Anbauteil 8 aus Fig. 7. Schließlich kann ein solches Anbauteil 8 auch als 4-poliger ZV-Steller bzw. als 4-poliger Zentralverriegelungssteller bezeichnet werden.

### Bezugszeichenliste

- 1: Beraumung
- 2: Gehäuse
- 3: Einsatz
- 4: Blende
- 5: Führungszapfen
- 6: Fluidschlauch
- 7: Seitliche Aussparung
- 8: Anbauteil
- 9: Schlauchhalterung
- 10: Rastaufnahme
- 11: Rastnase
- 12: Halteelement
- 13: Halterung für Anbauteil
- 14: Schließzylinder
- 15: Verriegelungsstift

- 100: Karosserie

## Patentansprüche

1. Beraumung (1) zur Leitung von Fluiden in einen dafür vorgesehenen Fluidbehälter, wobei die Beraumung (1) in einer Karosserie (100) eines Fahrzeugs integriert ist, wenigstens aufweisend
ein Gehäuse (2), das auf wenigstens einer Seite offen ist,
einen Einsatz (3), der wenigstens zum Teil in das Gehäuse (2) aufgenommen und in diesem linear verschiebbar gelagert ist, wobei der Einsatz (3) in einer Schließposition vollständig im Gehäuse (2) angeordnet ist und in einer Einfüllposition wenigstens zum Teil aus dem Gehäuse (2) herausgezogen ist, und
wobei der Einsatz (3) eine obere Öffnung zum Einfüllen eines Fluids und eine untere Öffnung zum Auslassen des Fluids aufweist, wobei die obere Öffnung einen größeren Querschnitt als die untere Öffnung aufweist **dadurch gekennzeichnet, dass** an der unteren Öffnung am tiefsten Punkt des Einsatzes (3) eine Schlauchhalterung (9) angeordnet ist, und die Beraumung zusätzlich eine Blende (4), die an dem Einsatz (3) angeordnet ist und in der Schließposition bündig mit der Karosserie (100) abschließt, und
einen Fluidschlauch (6), der an die Schlauchhalterung (9) an der unteren Öffnung des Einsatzes (3) anschließt und durch eine Aussparung im unteren Bereich des Gehäuses (2) aus diesem herausgeführt ist, um eingefülltes Fluid vom Einsatz (3) in einen Fluidtank im Inneren des Fahrzeugs zu leiten, aufweist.

2. Beraumung (1) nach Patentanspruch 1, **dadurch gekennzeichnet, dass** der Einsatz (3) in dem Gehäuse (2) gleitend gelagert ist.

3. Beraumung (1) nach Patentanspruch 2, **dadurch gekennzeichnet, dass** das Gehäuse um 90° versetzt zur offenen Seite wenigstens eine seitliche Aussparung (7) aufweist, in die wenigstens ein Führungszapfen (5) eingreift und gleitend geführt ist, wobei der wenigstens eine Führungszapfen (5) sich seitlich vom Einsatz (3) nach außen hin erstreckt, sodass für den Einsatz (3) sowohl eine Bewegungsführung als auch eine Bewegungsbegrenzung ausgebildet ist, durch welche die Schließposition und die Einfüllposition des Einsatzes (3) definiert sind.

4. Beraumung (1) nach Patentanspruch 1, **dadurch gekennzeichnet, dass** an dem Gehäuse (2) wenigstens ein Teleskopauszug angeordnet ist, der mit dem Einsatz (3) verbunden ist, sodass der Einsatz (3) mithilfe des Teleskopauszugs aus dem Gehäuse (2) herausziehbar ist.

5. Beraumung (1) nach Patentanspruch 1, **dadurch gekennzeichnet, dass** der Einsatz (3) einteilig ausgebildet ist.

6. Beraumung (1) nach Patentanspruch 1, **dadurch gekennzeichnet, dass** die untere Öffnung des Einsatzes (3) trichterförmig ausgebildet ist.

7. Beraumung (1) nach Patentanspruch 1, **dadurch gekennzeichnet, dass** die Schlauchhalterung (9) als eine Schlauchtülle ausgebildet ist, auf die der Fluidschlauch (6) aufsteckbar ist.

8. Beraumung (1) nach Patentanspruch 3, **dadurch gekennzeichnet, dass** die wenigstens eine seitliche Aussparung (7) am Gehäuse (2) geradlinig ausgebildet ist.

9. Beraumung (1) nach Patentanspruch 1, **dadurch gekennzeichnet, dass** das Gehäuse (2) wenigstens eine Halterung (13) aufweist, an die wenigstens ein Anbauteil (8) anbringbar ist.

10. Beraumung (1) nach Patentanspruch 9, **dadurch gekennzeichnet, dass** das wenigstens eine Anbauteil (8) ein Verschlusszylinder ist, welcher gegenüberliegend zur offenen Seite des Gehäuses (2) angeordnet ist.

11. Beraumung (1) nach Patentanspruch 1, **dadurch gekennzeichnet, dass** das Gehäuse (2) wenigstens ein Halteelement (12) zur Halterung der Beraumung (1) an der Karosserie (100) aufweist.

12. Beraumung (1) nach Patentanspruch 1, **dadurch gekennzeichnet, dass** an dem Gehäuse (2) wenigstens ein akustischer und/oder optischer Signalgeber angeordnet ist.

13. Beraumung (1) nach Patentanspruch 1, **dadurch gekennzeichnet, dass** an dem Gehäuse (2) wenigstens ein Lichtelement zur Beleuchtung des Einsatzes (3) angeordnet ist.

14. Beraumung (1) nach Patentanspruch 1, **dadurch gekennzeichnet, dass** an der Blende (4) wenigstens eine Rastnase (11) vorgesehen ist, die in wenigstens eine entsprechende Rastaufnahme (10) am Einsatz (3) eingreift.

## Claims

1. Spatial arrangement (1) for delivering fluids to a designated fluid reservoir, wherein the spatial arrangement (1) is integrated into a body (100) of a vehicle, at least having
a housing (2), which is open on at least one side,
an insert (3), which is at least partially received in the housing (2) and is mounted therein for linear displacement, wherein the insert (3) is arranged fully in the housing (2) in a closed position and is at least partially pulled out of the housing (2) in a filling position, and wherein the insert (3) has an upper opening for filling a fluid and a lower opening for draining the fluid, wherein the upper opening has a larger cross-section than the lower opening, **characterised in that** a hose holder (9) is arranged at the lower opening at the lowest point of the insert (3), and the spatial arrangement also has a cover (4), which is arranged on the insert (3) and lies flush with the body (100) in the closed position, and
a fluid hose (6), which is connected to the hose holder (9) at the lower opening of the insert (3) and routed out of the housing (2) through a recess in the lower region thereof in order to deliver filled fluid from the insert (3) to a fluid tank within the vehicle.

2. Spatial arrangement (1) according to claim 1,
**characterised in that** the insert (3) is mounted in a sliding manner in the housing (2).

3. Spatial arrangement according to claim 2, **characterised in that** the housing has at least one lateral recess (7) offset by 90° from the open side, into which at least one guide pin (5) engages and is guided in a sliding manner, wherein the at least one guide pin (5) extends laterally outwards from the insert (3), such that both a movement guide and a movement limitation are formed for the insert (3), by means of which the closed position and the filling position of the insert (3) are defined.

4. Spatial arrangement (1) according to claim 1,
**characterised in that** at least one telescopic slide is arranged in the housing (2) and is connected to the insert (3), such that the insert (3) can be pulled out of the housing (2) using the telescopic slide.

5. Spatial arrangement (1) according to claim 1,
**characterised in that** the insert (3) is formed in one piece.

6. Spatial arrangement (1) according to claim 1,
**characterised in that** the lower opening of the insert (3) is funnel-shaped.

7. Spatial arrangement (1) according to claim 1,
**characterised in that** the hose holder (9) is designed as a hose connector onto which the fluid hose (6) can be fitted.

8. Spatial arrangement (1) according to claim 3,
**characterised in that** the at least one lateral recess (7) on the housing (2) is straight.

9. Spatial arrangement (1) according to claim 1,
**characterised in that** the housing (2) has at least one holder (13), to which at least one attachment part (8) can be attached.

10. Spatial arrangement (1) according to claim 9,
**characterised in that** the at least one attachment part (8) is a closure cylinder, which is arranged opposite the open side of the housing (2).

11. Spatial arrangement (1) according to claim 1,
**characterised in that** the housing (2) has at least one retaining element (12) for retaining the spatial arrangement (1) on the body (100).

12. Spatial arrangement (1) according to claim 1,
**characterised in that** at least one acoustic and/or optical signal generator is arranged on the housing (2).

13. Spatial arrangement (1) according to claim 1,
**characterised in that** at least one lighting element for illuminating the insert (3) is arranged on the housing (2).

14. Spatial arrangement (1) according to claim 1,
**characterised in that** at least one latching tab (11) is provided on the cover (4) and engages with at least one corresponding latching receptacle (10) on the insert (3).

## Revendications

1. Disposition spatiale (1) pour le transport de fluides dans un réservoir de fluide prévu à cet effet, dans laquelle la disposition spatiale (1) est intégrée dans une carrosserie (100) d'un véhicule, comportant au moins un boîtier (2) qui est ouvert sur au moins un côté, un insert (3) qui est au moins partiellement reçu dans le boîtier (2) et est monté dans celui-ci de manière à pouvoir être déplacé linéairement, dans laquelle l'insert (3) est entièrement agencé dans le boîtier (2) dans une position de fermeture et est au moins partiellement extrait du boîtier (2) dans une position de remplissage, et dans laquelle l'insert (3) comporte une ouverture supérieure pour le remplissage d'un fluide et une ouverture inférieure pour l'évacuation du fluide, dans laquelle l'ouverture supérieure présente une section transversale plus grande que l'ouverture inférieure, **caractérisée en ce qu'**un support de tuyau (9) est agencé au niveau de l'ouverture inférieure au point le plus profond de l'insert (3), et la disposition spatiale comporte de plus un cache (4) qui est disposé sur l'insert (3) et affleure avec la carrosserie (100) dans la position de fermeture, et
un tuyau de fluide (6) qui se raccorde sur le support de tuyau (9) au niveau de l'ouverture inférieure de l'insert (3) et qui sort de celui-ci à travers un évidement situé dans la zone inférieure du boîtier (2) afin de conduire le fluide versé à partir de l'insert (3) dans un réservoir de fluide à l'intérieur du véhicule.

2. Disposition spatiale (1) selon la revendication 1,
**caractérisée en ce que** l'insert (3) est monté de manière coulissante dans le boîtier (2).

3. Disposition spatiale (1) selon la revendication 2,
**caractérisée en ce que** le boîtier comporte au moins un évidement latéral (7) décalé de 90° par rapport au côté ouvert, dans laquelle au moins un axe de guidage (5) s'engage et est guidé de manière coulissante, dans laquelle ledit au moins un axe de guidage (5) s'étend latéralement à partir de l'insert (3) vers l'extérieur, de telle sorte qu'aussi bien un guidage de mouvement qu'une limitation de mouvement sont réalisés pour l'insert (3), au moyen desquels la position de fermeture et la position de remplissage de l'insert (3) sont définies.

4. Disposition spatiale (1) selon la revendication 1,
**caractérisée en ce qu'**au moins une coulisse télescopique, qui est reliée à l'insert (3), est agencée sur le boîtier (2), de telle sorte que l'insert (3) peut être extrait du boîtier (2) au moyen de la coulisse télescopique.

5. Disposition spatiale (1) selon la revendication 1,
**caractérisée en ce que** l'insert (3) est réalisé d'un seul tenant.

6. Disposition spatiale (1) selon la revendication 1,
**caractérisée en ce que** l'ouverture inférieure de l'insert (3) est réalisée en forme d'entonnoir.

7. Disposition spatiale (1) selon la revendication 1,
**caractérisée en ce que** le support de tuyau (9) est réalisé sous la forme d'un embout de tuyau sur lequel le tuyau de fluide (6) peut être emmanché.

8. Disposition spatiale (1) selon la revendication 3, **caractérisée en ce que** ledit au moins un évidement latéral (7) sur le boîtier (2) est réalisé de façon rectiligne.

9. Disposition spatiale (1) selon la revendication 1,
**caractérisée en ce que** le boîtier (2) comporte au moins un support (13) sur lequel au moins une pièce rapportée (8) peut être montée.

10. Disposition spatiale (1) selon la revendication 9,
**caractérisée en ce que** ladite au moins une pièce rapportée (8) est un cylindre de fermeture qui est agencé opposée au côté ouvert du boîtier (2).

11. Disposition spatiale (1) selon la revendication 1,
**caractérisée en ce que** le boîtier (2) comporte au moins un élément de maintien (12) pour maintenir la disposition spatiale (1) sur la carrosserie (100).

12. Disposition spatiale (1) selon la revendication 1,
**caractérisée en ce qu'**au moins un capteur de signal acoustique et/ou optique est agencé sur le boîtier (2).

13. Disposition spatiale (1) selon la revendication 1,
**caractérisée en ce qu'**au moins un élément lumineux est agencé sur le boîtier (2) pour éclairer l'insert (3).

14. Disposition spatiale (1) selon la revendication 1,
**caractérisée en ce qu'**au moins un ergot d'enclenchement (11) est prévu sur le cache (4), lequel ergot vient en prise avec au moins un logement d'enclenchement (10) correspondant au niveau de l'insert (3).
